# EUROPEAN PATENT SPECIFICATION

(11) **EP 2 363 964 B1**
(45) Date of publication and mention of the grant of the patent: **31.07.2013**
(21) Application number: 10360013.6
(22) Date of filing: 26.02.2010
(51) Int. Cl.: H04B 7/06, H04B 7/04

(54) **Sub-channel transmission mode modification**
Modifizierung des Unterkanalübertragungsmodus
Modification du mode de transmission de sous-canal

(43) Date of publication of application: 07.09.2011
(73) Proprietor: Alcatel Lucent, 75007 Paris (FR)
(72) Inventor: Yang, Jun, Swindon, Wiltshire SN5 5SA (GB); Khan, Ather, Swindon, Wiltshire SN5 5AG (GB); Zhou, Hai, Swindon SN7 7FG (GB); Huang, Howard, New York, NY 10003 (US)
(74) Representative: Sarup, David Alexander

(56) References cited:
- EP-A2- 2 100 385
- WO-A2-2009/008805
- US-A1- 2007 053 320
- "OVERVIEW OF IEEE P802.16m", 3GPP DRAFT; L80216-10_0002, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Diego, CA; 20100113, 13 January 2010 (2010-01-13), XP050441417, [retrieved on 2010-01-13]
- QUALCOMM EUROPE: "MIMO Codebook restrictions for single stream transmissions", 3GPP DRAFT; R1-094904_MIMO_CODEBOOK_RESTRICTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389269, [retrieved on 2009-11-04]

## Description

### FIELD OF THE INVENTION

The present invention relates to a method of modifying a transmission mode of plurality of sub-channels, a computer program product and network node operable to carry out that method.

### BACKGROUND

Base stations in wireless communications systems provide wireless connectivity to user equipment within a geographic area, or cell, associated with the base station. Wireless communication links between a base station and each of the user equipment located within a cell served by that base station typically include one or more downlink (or forward) channels for transmitting from a base station to user equipment and one or more uplink (or reverse) channels for transmitting information from user equipment to a base station.

Multiple input multiple output (MIMO) techniques may be employed in appropriate circumstances. MIMO techniques require that a base station and user equipment include multiple transmission and reception antennas. For example, a base station with MIMO capability will typically include multiple antennas capable of transmitting multiple independent and distinct signals to multiple user equipment concurrently and on the same frequency band. Furthermore user equipment with MIMO capability includes multiple reception antennas capable of receiving signals from the multiple transmission antennas provided on a MIMO capable base station.

It will be understood, that for a cellular system with M antennas at a base station and N antennas at user equipment, the radio channel between the base station and user equipment can be described in terms of N multiplied by M links. Furthermore, it will be understood that legacy user equipment may not be MIMO compatible. In such a case, user equipment may have only a single reception antenna. In this case, that legacy user equipment without MIMO capability is likely to see some of the radio signals of a MIMO transmission as radio interference and therefore operate sub-optimally.

WO2009/008805 describes a MIMO-capable base station operable to allocate a maximum transmission power budget to each of its antennas. The base station is operable to allocate one or more carriers to serve each of MIMO and non-MIMO users. For each carrier, the base station uses information about the amount of MIMO and non-MIMO user resources to derive a set of coefficients. Those coefficients correspond to a unique antenna and are representative of a proportion of a maximum power budget for that carrier. The base station then determines, for each carrier, a maximum power budget for each antenna. A total maximum transmission power budget for an antenna is derived by combining the maximum transmission power budgets of the carriers transmitted on the antenna.

US2007/0053320 describes a method of control channel signalling to a plurality of user terminals. Control channel signalling is a mechanism used to announce resource sharing in a network device such as an allocation table. An allocation table can contain descriptions of resources allocations for all active terminals in a given cell for a duration of a frame or for a defined duration of a set of frames. The allocation table can include allocation identification and transport format indications for terminals, which will either have downlink or uplink resources allocated during that frame. In one embodiment described, the control channel signalling is used to signal to special groupings of terminals in the same frame. For example, if user equipment has a single antenna configuration (or is non-MIMO capable) or if user equipment has a multi-antenna configuration (and is MIMO capable), allocations may be made for those user equipment in different frames. That is to say, MIMO capable user equipment are allocated resources in a first frame and resources for non-MIMO capable user equipment are allocated in a second frame. How many frames and what kind of frame sequences are allocated for non-MIMO and MIMO users depends on the mutual radio of active terminals appearing each time in a cell, and their respective transmission needs and traffic flow requirements.

Although techniques exist to allow MIMO and non-MIMO enabled user equipment to operate in a MIMO capable base station cell, they each have their own shortcomings. Accordingly, it is desired to provide and improved technique for modifying the transmission mode of sub-channels in a MIMO enabled network.

### SUMMARY

A first aspect provides a method of modifying a transmission mode of a plurality of sub-channels, each forming part of a radio frequency channel, in a wireless telecommunications network,
each of said sub-channels being transmitted by one of a plurality of transmission antenna provided on a first network node to a plurality of second network nodes,
said plurality of second network nodes comprising a first set and a second set,
said first set having a single reception antenna and said second set having a plurality of reception antenna,
said method comprising the steps of:

(i) receiving an indication of set size of those second network nodes in each of said first and second sets, and
(ii) modifying said transmission mode of said sub-channels by modifying each sub-channel data stream by mixing a portion of each sub-channel data stream with each other sub-channel data stream, by applying a mapping matrix having coefficients selected in accordance with said indication of the proportion of those second network nodes in each of said first and second sets to mix said data stream of said sub-channels.

The first aspect recognises that in a fully compatible MIMO telecommunications system, the use of multiple antennas at both two communicating network nodes (ie at both transmitter and receiver) may result in improved communication performance. In particular, MIMO operation may offer an increase in data throughput without additional bandwidth. MIMO may involve two transmission and two reception antennas, but it will be appreciated that MIMO operation is applicable to arrangements in which more than two antenna sets may be used.

It will be understood that to fully benefit from MIMO operation each of the transmitting and receiving network nodes must be aware and capable of receiving MIMO sub-channels.

It will be understood that some network nodes may be unable to operate in a MIMO mode, possibly as a result of having a single reception antenna and therefore will typically be unable to operate to de-code a Multiple Input signal transmitted by another network node. Such network nodes may be known as non-MIMO or "legacy" network nodes. Legacy network nodes may be expecting to see only one sub-channel. All other sub-channels other than the sub-channel will typically be seen as interference and noise.

Accordingly, it will be understood that operation of MIMO capable network nodes degrades the efficiency of operation of legacy network nodes. However, reverting to a non-MIMO operation mode, though beneficial to legacy network nodes, results in a loss of the improved data throughput which can be achieved through full MIMO operation.

It will therefore be understood that in a system having a MIMO capable network nodes and non-MIMO capable (legacy) network nodes, some compromise is necessary to try and balance effective and efficient operation of both MIMO capable and legacy network nodes to ensure efficient operation of a wireless telecommunications network as a whole.

It is possible to implement such a compromise by modifying the transmission mode of MIMO sub-channels such that they can be at least partially understood by legacy network nodes. As a result, the modified sub-channels, are no longer simply seen as noise by legacy network nodes.

The first aspect recognises that the degree of modification necessary may be optimised having regard to the relative set size of legacy and MIMO capable network nodes with which a MIMO capable first network node wishes to communicate. It will, for example, be appreciated that If there are no legacy network nodes to be served, little or no, modification of MIMO operation of the first network node may be necessary.

By monitoring the set size of MIMO and legacy second network nodes it is possible for a network to dynamically respond to changes in distribution of the second network nodes, thereby ensuring that overall efficiency of the telecommunications network can be improved.

Step (ii) comprises modifying each sub-channel by compositing a portion of a data stream of each sub-channel with a data stream of each other sub-channel. The degree of compositing or mixing of sub-channels may be determined by the set size of second network nodes determined to be in the first and second sets. A low number of legacy (first set) second network nodes may result, for example, in a low level of mixing signals prior to transmission by a transmission antenna. That is to say, only a small portion of each sub-channel may be mixed with each other sub-channel, with the result that each sub-channel remains substantially "pure". As a result, the operation of MIMO capable second network nodes may be minimally affected and the high data throughput offered by MIMO operation can be almost fully utilised, whilst also minimising the extent to which the MIMO channels are seen by the very few legacy nodes as noise and interference.

Each sub-channel is allocated an "unmodified" data stream and the modification step (ii) comprises applying a mapping matrix to the "unmodified" stream allocated to each of the sub-channels.

It is possible to implement modification of sub-channel modification by using a mapping matrix technique. An example of such mapping techniques is Virtual Antenna Mapping (VAM). A mapping matrix technique is implemented by applying a mathematical mapping matrix to the "pure" MIMO sub-channels intended for transmission by a first network node. The operation of a mapping matrix, and specifically coefficients of a mapping matrix, is such that it determines the extent of mixing between pure MIMO sub-channels that occurs to produce a composite signal.

When installing a MIMO network node it is possible to commission the system such that a fixed set of mapping matrix coefficients is applied or instructed, such that a fixed modification is made to sub-channel transmission mode, irrespective of the relative proportion of the second network nodes in the first and second sets, to ensure that network node can support communication with both MIMO-capable and non MIMO-capable network nodes. Such an arrangement ensures that a MIMO capable first network node is capable of serving both MIMO and non-MIMO second network nodes. However, MIMO and non-MIMO users typically demand different mapping matrix coefficients to operate in a most efficient manner. Although fixed mapping matrix coefficients can be selected to offer a compromise between MIMO and non-MIMO users, the static values selected may not be optimum, especially in scenarios where there are only MIMO users (or only non-MIMO users) in a given cell.

Coefficients of the mapping matrix are selected in accordance with the indication of the set size of those second network nodes in each of the first and second sets.

Accordingly, adapting mapping matrix coefficients on the basis of the number of MIMO and non-MIMO users in a cell, offers a dynamic approach thereby reducing performance degradation on both MIMO and non-MIMO users to optimise overall network performance.

In one embodiment, step (i) comprises the step of receiving an indication a number of the second network nodes in the second set and a number of the second network nodes in the first set.

In one embodiment, step (i) comprises the step of receiving an indication of transmission power allocated to the second network nodes in the second set and receiving an indication of transmission power allocated to the second network nodes in the first set.

In one embodiment, step (i) comprises the step of receiving an indication a number of channelisation codes allocated to the second network nodes in the second set and an indication of a number channelisation codes allocated to the second network nodes in the first set.

Accordingly, it will be understood that the most accurate indication of the set size of second network nodes in the first and second set can be obtained by simply determining the number of each in an area of interest. That may be done, in a wireless telecommunications network, by requesting each network node to report back on their operation capability and counting the responses to that request into network nodes belonging to each of the first and second sets.

It will, however, be appreciated that various other parameters typically monitored or monitorable in a wireless telecommunications network may be used as indicators of the relative set size of second network nodes in each set. For example, it may be possible to use allocated transmission power or allocated channelisation codes, or any other similar parameter, in order to determine an indication of the relative proportion of second network nodes in each set.

In one embodiment, step (i) further comprises the step of calculating a proportion from the indication of set size of those second network nodes in each of the first and second sets.

Accordingly, calculating a proportion of second network nodes in the second set to the first set (or the first set to the second set) offers one means to calculate the relative set size of second network nodes in the first and second sets. It will be appreciated that any appropriate comparative technique may be used whereby a proportion of one set to the other set may be determined, for example, by use of a ratio, a fixed number, a look up table or implementation of threshold or trigger values for each set.

In one embodiment, step (i) further comprises the step of determining whether members of either one of the first and the second set of the second network nodes number zero. Accordingly, by determining whether the indication of set size of either one of the first and the second set of the second network nodes is zero, appropriate modification parameters may be set.

It will be understood that, if there are no members in the first or second set of second network nodes, modification of the transmission mode of the sub-channels may be simplified such that operation of the first network node is tailored directly to one or other type of operation. That is to say, the first network node may operate in purely MIMO, or a purely non-MIMO (or legacy) manner.

In one embodiment, if the indication indicates that there are no second network nodes in the second set, the modification of the sub-channels comprises switching transmission on one or more of the sub-channels to zero. In this case, there are no MIMO second network nodes and the first network node may transition to a simple non-MIMO mode of operation. Transmission of some sub-channels may be stopped, prevented, turned to minimum or switched to substantially zero.

In one embodiment, steps (i) and (ii) are periodically repeated. Accordingly, operation of the first and second network nodes is constantly optimised, thereby offering improvements to the overall efficiency of the operation of the wireless telecommunications network. In one embodiment, the repetition period is pseudorandom. In one embodiment, steps (i) and (ii) are repeated in response to a trigger event, for example, call set up, or tear down.

In one embodiment, the first set of said second network nodes comprise non-MIMO compatible network nodes and the second set of the second network nodes comprise MIMO capable network nodes.

In one embodiment, the first network node comprises a base station and the second network nodes comprise user equipment.

A second aspect provides a computer program product operable, when executed on a computer, to perform the method steps of the first aspect.

A third aspect provides a network node operable to modify a transmission mode of a plurality of sub-channels, each forming part of a radio frequency channel, in a wireless telecommunications network,
each of the sub-channels being transmitted by one of a plurality of transmission antenna provided on a first network node to a plurality of second network nodes,
said plurality of second network nodes comprising a first set and a second set,
said first set having a single reception antenna and the second set having a plurality of reception antenna,
said network node comprising:
reception logic operable to receive an indication of a set size of those second network nodes in each of the first and second sets, and
modification logic operable to modify the transmission mode of the sub-channels by modifying each sub-channel data stream by mixing a portion of each sub-channel data stream with each other sub-channel data stream, by applying a mapping matrix having coefficients selected in accordance with said indication of the proportion of those second network nodes in each of said first and second sets to mix said data stream of said sub-channels.

In one embodiment, the reception logic is operable to receive an indication a number of the second network nodes in the second set and a number of the second network nodes in the first set.

In one embodiment, the reception logic is operable to receive an indication of transmission power allocated to the second network nodes in the second set and receiving an indication of transmission power allocated to the second network nodes in the first set.

In one embodiment, the reception logic is operable to receive an indication a number of channelisation codes allocated to the second network nodes in the second set and an indication of a number channelisation codes allocated to the second network nodes in the first set.

In one embodiment, the modification logic is operable to calculate a proportion from the indication of set size of those second network nodes in each of the first and second sets.

In one embodiment, the reception logic is operable to determine whether members of either one of the first and the second set of the second network nodes number zero.

In one embodiment, if the reception logic determines that there are no second network nodes in the second set, said modification logic is operable to modify the transmission mode of the sub-channels by switching transmission on one or more of the sub-channels to zero.

In one embodiment, said network node further comprises repetition logic operable to periodically repeat operation of the reception logic and modification logic. In one embodiment, the repetition logic is operable to implement pseudorandom periodic repetition of operation of the reception logic and the modification logic. In one embodiment, repetition logic is operable to implement repeat operation of the reception logic and modification logic in response to a trigger event.

In one embodiment, the first set of the second network nodes comprise non-MIMO compatible network nodes and the second set of the second network nodes comprise MIMO capable network nodes.

In one embodiment, the first network node comprises a base station and the second network nodes comprise user equipment.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiment of the present invention will now be described further, with reference to the accompanying drawings, in which:
Figure 1a illustrates the main components of a wireless telecommunications network according to one embodiment;
Figure 1b illustrates in more detail some of the components shown in figure 1 a;
Figure 2 illustrates schematically a base station for use in the wireless telecommunications network of Figures 1a and 1 b; and
Figures 3a to 3c illustrate schematically methods of modifying a transmission mode of sub-channels in accordance with various embodiments.

### DESCRIPTION OF THE EMBODIMENTS

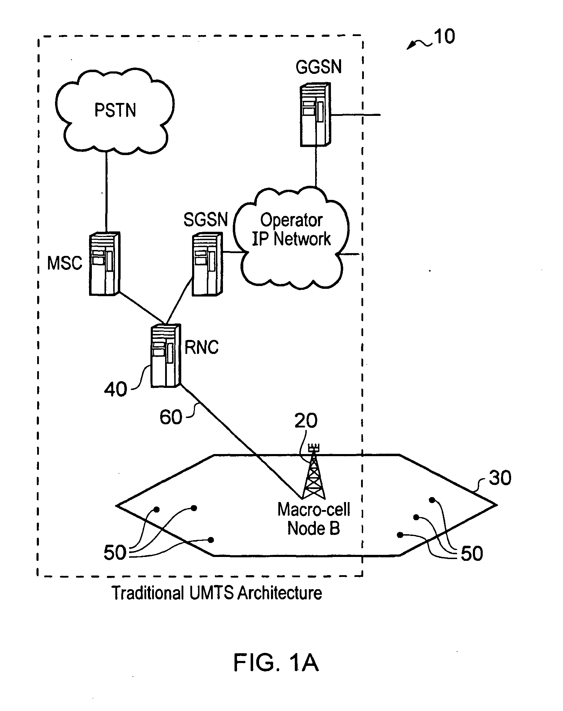

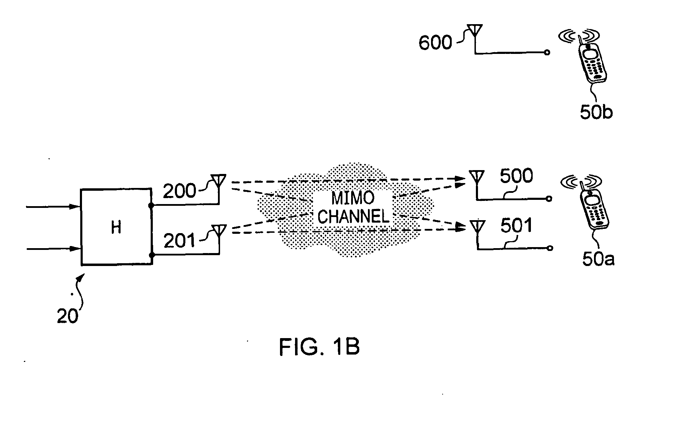

Figure 1 a illustrates a wireless telecommunications system 10 according to one embodiment. User equipment 50 roam through the wireless telecommunications system. Base stations 20 are provided which support areas of radio coverage 30. A number of such base stations 20 are provides and distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. It will be appreciated that in a multiple input multiple output system (MIMO) a number of antennas supports communication within each associated sector. Each base station 20 has multiple antennas. It will be appreciated that Figure 1 illustrates a small sub set of a total number of user equipment and base stations that may be present in a typically communications system.

The wireless communications system is managed by a radio network controller (RNC) 40. The radio network controller 40 controls operation of the wireless telecommunications system by communicating with a plurality of base stations over a backhaul communications link 60. The RNC also communicates with user equipment 50 via each base station and thus effectively manages a region of the entire wireless communications system.

Figure 1b illustrates in more detail an arrangement of a base station 20 and user equipment 50a, 50b of the wireless telecommunications network 10 shown in Figure 1 a. Base station 20 and user equipment 50a, 50b are examples of first and second network nodes. Although Figure 1b shows just one base station and two types of user equipment for the sake of clarity, it will be appreciated that many such base stations and user equipment may be deployed in wireless telecommunications network 10. In a multiple input multiple output capable network each base station 20 is provided with M antennas, whilst each user equipment with MIMO capability is provided with N antennas. Typically M and N are integer values greater than 1. In Figure 1b base station 20 has two transmission antenna 200, 201. User equipment 50a is MIMO capable and has two reception antenna 500, 501. User equipment 50b is not MIMO compatible and as a result has only one transmission and reception antenna 600.

Taking as an example MIMO compatible base station and user equipment 50a, a MIMO radio channel is established between the base station 20 and the user equipment and sub-channels are provided between each antenna of the base station 20 and user equipment 50a. It will be appreciated that each sub-channel may propagate between the pairs of antenna by various signal paths. For example, the first path will exist which may be a direct path between the antennas, subsequent paths may be secondary or reflected paths between that pair of antennas.

In a fully compatible MIMO telecommunications system, the use of multiple antennas at both the base station 20 and user equipment 50a (ie at both transmitter and receiver) may result in improved communication performance. In particular, MIMO operation may offer an increase in data throughput without additional bandwidth.

It will be understood that in a MIMO system, each antenna 200, 201 provided at a base station may operate to transmit substantially the same signal with an appropriate phase weighting such that signal power is maximised at the receiver antenna 500, 501 of user equipment 50a. Such an arrangement may allow for an increase in processing gain at user equipment 50a, by appropriate use of constructive combination of received and partially received data packets from each transmit antenna 200, 201. To benefit from such an arrangement and de-code data packets sent by base station 20 effectively, user equipment 50a must be aware of the scheme by which data is being transmitted by antenna 200, 201.

Furthermore, it will be understood that the transmit antenna 200, 201 of base station 20 may operate such that a high rate signal is split into multiple (in the illustrated case, two) lower rate data streams. In such a case, each lower rate data stream is transmitted from a different transmit antenna in the same frequency channel (known collectively as a MIMO channel). Those signals may arrive at the receive antenna 500, 501 of user equipment 50a with sufficiently different spatial signatures that user equipment 50a can operate to effectively separate the streams, thereby creating parallel channels.

In each case referred to above, a signal transmitted by each antenna 200, 201 of the base station may be considered to be transmitted on a sub-channel of a MIMO channel, the sub-channels transmitted by each antenna together forming the MIMO channel.

It will be understood that legacy user equipment 50b is typically unable to operate in a MIMO mode, since it has only one reception antenna and cannot operate to de-code a Multiple Input signal transmitted by antenna 200, 201 of base station 20.

In general, communication between user equipment 50 and a base station 20 is dependent upon use of a communication channel known as a "pilot" channel, transmitted by base station 20. The pilot channel may be considered to act as a broadcast channel, informing user equipment in area 30 of the presence of base station 20. The pilot signal is used by user equipment to determine which base station to connect to. Furthermore, various control messages can be sent to user equipment on the pilot channel.

In the case of MIMO operation each of the sub-channels transmitted by base station 20 has its own pilot signal. That is to say, each transmit antenna 200, 201 transmits a sub-channel and that sub-channel includes a pilot signal. MIMO compatible user equipment 20a is capable of receiving and de-coding both pilot signals. Legacy user equipment 50b has only one reception antenna 600 and is expecting to receive only one pilot signal. In a system having a MIMO capable base station, transmitting more than one pilot signal, legacy user equipment 50b experiences all sub-channels other than an expected primary sub-channel as interference and noise.

Accordingly, operation of a MIMO capable base station 20 in MIMO mode degrades the efficiency of operation of legacy user equipment in area 30 served by that MIMO capable base station 20. However, reverting to a non-MIMO operation mode, though beneficial to legacy user equipment 50b, results in a loss of the improved data throughput which can be achieved through full MIMO operation between base station 20 and MIMO capable user equipment 50a.

It will therefore be understood that in a system having a MIMO capable base station which serves both MIMO capable user equipment 50a and non-MIMO capable (legacy) user equipment 50b, some compromise is necessary to try and balance effective and efficient operation of both MIMO capable and legacy user equipment to ensure efficient operation of the telecommunications network 10 as a whole.

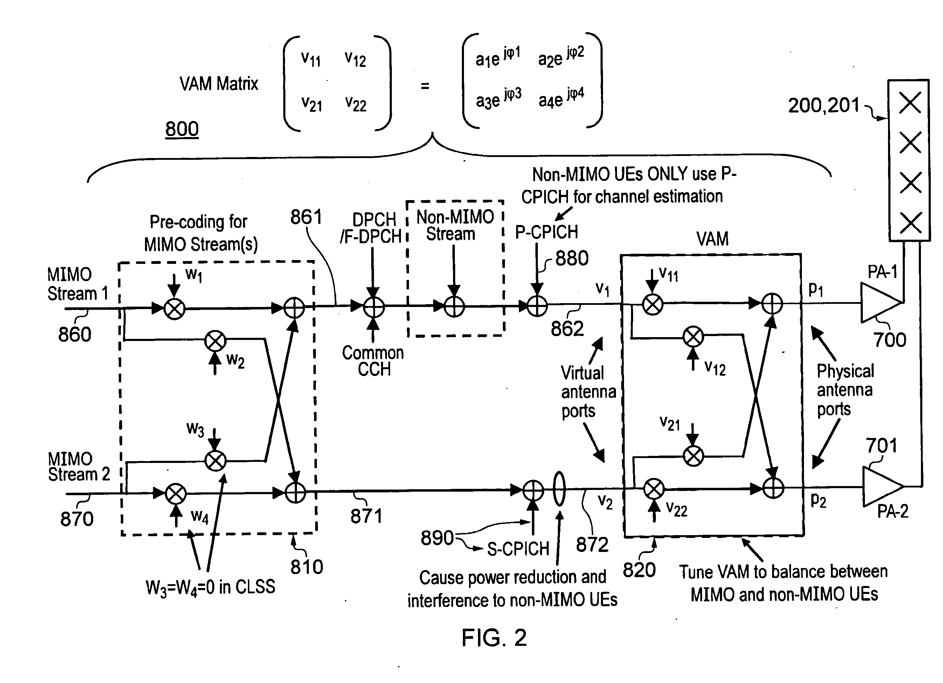

It is possible to implement such a compromise by applying a mapping technique, for example, a Virtual Antenna Mapping (VAM) technique. A mapping technique may be implemented by applying a mapping matrix, for example, a VAM matrix, to the "pure" MIMO sub-channels intended for transmission by base station antenna 200, 201. The operation of an example technique using VAM and a VAM matrix is described functionally in more detail having regard to the schematic illustration of Figure 2.

Figure 2 illustrates schematically components of a base station 20 for use in a telecommunications network shown in Figures 1 a and 1 b. Base station 20 comprises transmit antenna 200, 201 each of which has an associated power amplifier, 700, 701. The base station further comprises signal processing logic 800. Signal processing logic 800 comprises MIMO sub-channel pre-coding logic 810 and VAM processing logic 820.

A stream of data intended for transmission on a sub-channel from a transmission antenna 200, 201 is fed to base station signal processing logic 800. The processing logic creates two independent MIMO data streams 860, 870, each to be transmitted on an independent MIMO sub-channel. Those MIMO data streams are fed to MIMO sub-channel pre-coding logic 810, which receives those streams and passes two appropriate processed signals 861, 871 on through signal processing logic 800. The streams 861, 871 are also fed respective pilot channel signals 880, 890. MIMO sub-channel data streams including pilot information 862, 872 are then passed to VAM processing logic 820.

It will be understood that legacy user equipment operable to receive on only one reception antenna will typically be operable to understand and receive a "primary" channel signal 862. The non-MIMO user equipment only use the pilot channel information of such a "primary" pilot channel for power estimation purposes. "Secondary" sub-channel 872 will not typically be understood by legacy user equipment and transmission of that signal 872 causes power reduction and interference to non-MIMO (legacy) user equipment.

VAM processing logic 820 operates to modify the transmission mode of the MIMO sub-channels 862, 872. The modification applied by VAM processing logic 820 acts to mix the pure signals. That is to say, the VAM processing logic acts to produce two composite signals, each containing a proportion of both MIMO sub-channels 862,872, to be transmitted by MIMO antenna 200, 201. The precise proportions of the mix are set by VAM processing logic, and in particular in relation to VAM matrix coefficients implemented by VAM processing logic.

It will be appreciated that whilst production of two composite signals may detrimentally affect MIMO operation of fully MIMO compatible user equipment 50a, it will significantly improve the operation of non-MIMO compatible user equipment 50b. In order to maximise efficient operation of a wireless telecommunications network 10 it is desired to improve tune the operation of VAM processing logic 820, and in particular VAM matrix coefficients (which control the extent of "mixing" implemented on each MIMO sub-channel) to improve legacy user equipment data throughput, whilst maintaining performance of MIMO user equipment.

When installing a MIMO base station 20 it is possible to commission the system such that a fixed set of VAM matrix coefficients is applied by VAM processing logic. Such an arrangement ensures that the base station is capable of serving both MIMO and non-MIMO user equipment in the same cell. However, MIMO and non-MIMO users typically require different VAM coefficients. Although fixed VAM matrix coefficients can be selected to offer a compromise between MIMO and non-MIMO users, the static values selected may not be optimum, especially in scenarios where there are only MIMO users (or only non-MIMO users) in a given cell.

Base station 20 is therefore operable to adapt VAM coefficients implemented by VAM processing logic on the basis of the number of MIMO and non-MIMO users in a cell, thereby offering a dynamic approach and reducing performance degradation on both MIMO and non-MIMO users.

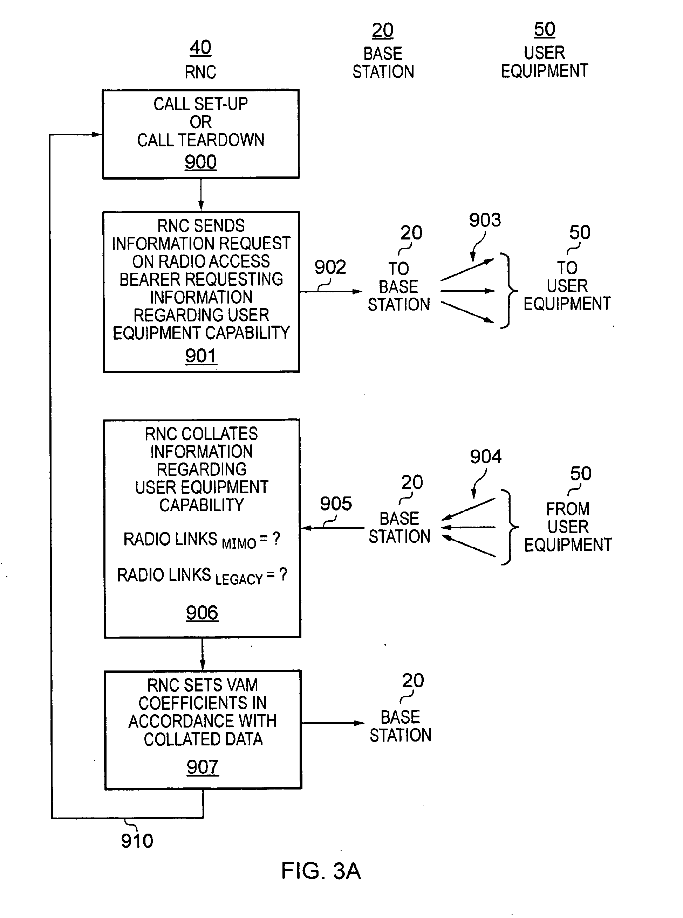

Various parameters may be used to identify appropriate mapping matrix coefficients, for example VAM matrix coefficients, as will be described in more detail in relation to Figures 3a to 3c.

Figures 3a to 3c illustrate schematically methods of modifying a transmission mode of sub-channels in accordance with various embodiments of the present invention.

Figure 3a illustrates the steps taken by RNC 40, a base station 20 connected to said RNC 40, and user equipment 50 comprising MIMO capable user equipment 50a and legacy user equipment 50b. RNC initiates a process at call set up or call tear down (step 900), and sends an information request to base station 20 (step 901). That information request may be sent on a radio access bearer (RAB) to base station 20 (902). The request in Fig. 3a takes the form of a request relayed (903) by base station 20 to user equipment 50 to report back on their MIMO capability or otherwise.

User equipment 50 reports back (904) to base station 20 regarding their capability. Base station 20 relays (905) that information back to RNC 40. RNC collates information regarding user equipment capability and gathers an indication regarding how many MIMO compatible user equipment are in the cell 30 served by base station 30 and how many legacy equipment are in the cell 30 served by base station 30. That step is illustrated as step 906 in Figure 3a.

In the particular embodiment illustrated in Figure 3a, the RNC 40 uses the collated information to calculate a ratio of MIMO to non-MIMO user equipment.

The following table may be used to look up appropriate VAM coefficients to send to base station 20 for implementation in accordance with the arrangement shown in Figure 2.

| **Ratio of the no. of MIMO users to non MIMO users** | **VAM coefficient set** |
|---|---|
| 1 | Set 1 |
| 0.5 | Set 2 |
| Less than 0.25 | Set 3 |
| No MIMO user in the cell | Set 4 |
| No non MIMO users in the cell | Set 5 |

Such a table is an illustrative example and can be modified to increase the granularity in both the ratio of the number of MIMO and non-MIMO capable user equipment. VAM coefficient sets 1 to 5 are typically obtained by simulations or measurement to achieve best performance for both MIMO and non-MIMO user equipment. It will be appreciated that various other groupings, ranges and values may be used in order to set a mapping matrix coefficient set. Furthermore, it will be appreciated that it is possible to have more (or fewer) than five possible coefficient sets.

Once RNC 40 has calculated a ratio and looked up an appropriate VAM coefficient set, that information is sent at step 907 to base station 20 for implementation by VAM processing logic 820 shown in Figure 2. Once RNC sends and indication of which VAM coefficient set to base station 20, base station 20 looks up relevant coefficients corresponding to that set in a look up table and implements appropriate changes at VAM logic 820.

The process illustrated in Figure 3a is typically periodically repeated (910) to react to user equipment changes in cell 30.

It will be appreciated that one possible alternative, if it is determined that there are no MIMO users in the cell 30, is to revert to single antenna operation. Similarly, if it is determined that there are no non-MIMO users in a cell, base station 20 may be instructed to operate in pure MIMO mode, and not composite signals.

It will be appreciated that in some cases, RNC intervention may be avoided. In such a case, rather than use an information request triggered by an RNC, a base station 20 may itself periodically act to monitor the number of MIMO and non-MIMO active users in its cell. Furthermore, the base station 20 may itself determine the ratio of MIMO to non-MIMO users and implement a sub-channel modification, by changing mapping matrix coefficients autonomously without RNC intervention. Such an arrangement may offer a more dynamic and efficient response to changes in user equipment being served by a base station.

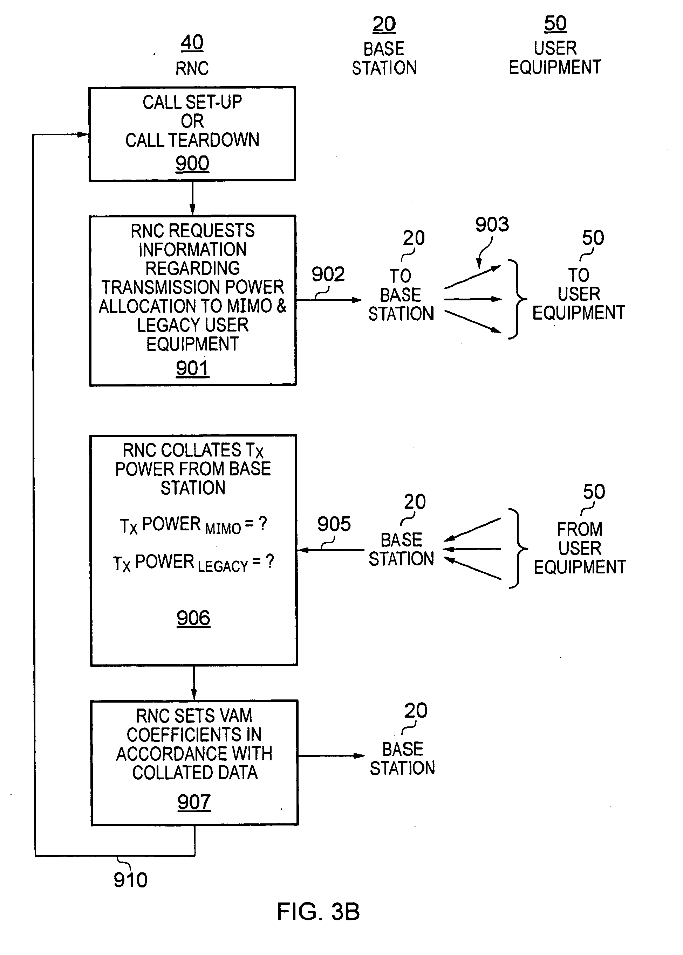

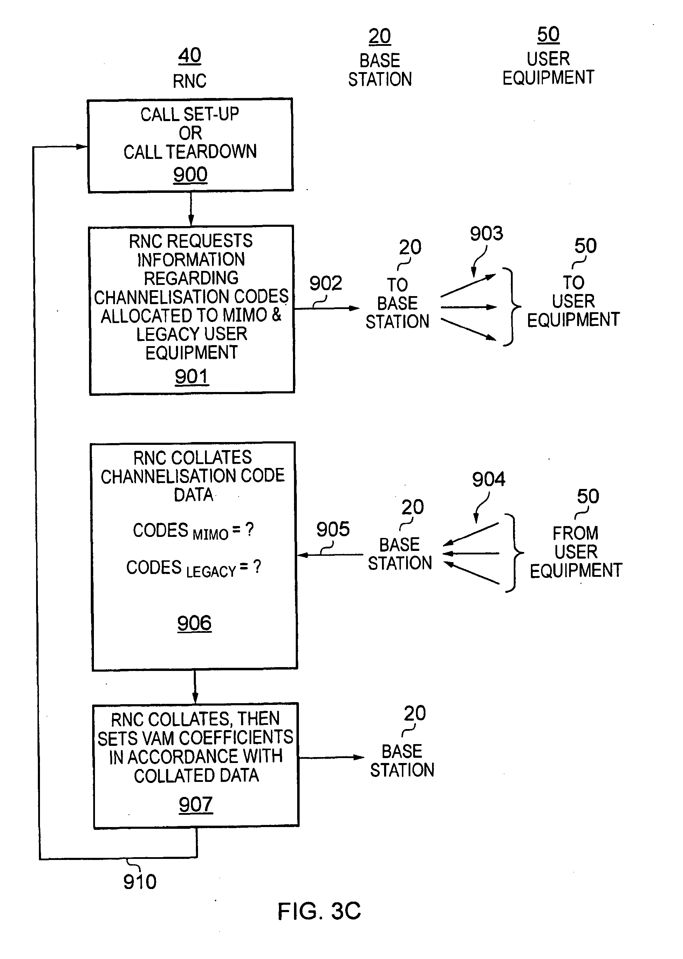

Figures 3b and 3c illustrate different triggers for VAM coefficient adaptation. Analogous steps have been numbered identically to the steps shown in Figure 3a.

In the method illustrated schematically in Figure 3b, RNC operates to request information from base station 20 regarding the relative transmission power allocated to MIMO and non MIMO users. It will be understood that this information is indicative of the number of MIMO and non-MIMO users in the cell.

In the method illustrated schematically in Figure 3c, RNC operates to request information from base station 20 regarding channelisation codes allocated to MIMO and non MIMO users. It will be understood that this information is indicative of the number of MIMO and non-MIMO users in the cell.

By implementing a dynamically changing set of VAM matrix coefficients in response to the relative numbers of MIMO and non-MIMO user equipment in a cell, rather than implementing a single fixed set of coefficients, performance degradation can be minimised. Utilising a fixed set of Vam coefficients without regard to the proportion of types of user in the cell can lead to a throughput reduction on MIMO and on-MIMO users in the region of 10% to 20%. Use of a method in accordance with this invention may result in a data throughput loss in the region of less than 5%.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of modifying a transmission mode of a plurality of sub-channels, each forming part of a radio frequency channel, in a wireless telecommunications network (10),
each of said sub-channels being transmitted by one of a plurality of transmission antenna (200; 201) provided on a first network node to a plurality of second network nodes (50),
said plurality of second network nodes (50) comprising a first set and a second set,
said first set having a single reception antenna and said second set having a plurality of reception antenna,
said method comprising the steps of:
(i) receiving (905) an indication of set size of those second network nodes in each of said first and second sets, and
(ii) modifying (907) said transmission mode of said sub-channels by modifying each sub-channel data stream (862, 872) by mixing a portion of each sub-channel data stream (862, 872) with each other sub-channel data stream, by applying (820) a mapping matrix having coefficients selected in accordance with said indication of the proportion of those second network nodes in each of said first and second sets to mix said data stream of said sub-channels.

2. A method according to claim 1, wherein step (i) comprises the step of receiving an indication a number of said second network nodes (50) in said second set and a number of said second network nodes in said first set.

3. A method according to claim 1, wherein step (i) comprises the step of receiving an indication of transmission power allocated to said second network nodes in said second set and receiving an indication of transmission power allocated to said second network nodes in said first set.

4. A method according to claim 1, wherein step (i) comprises the step of receiving an indication a number of channelisation codes allocated to said second network nodes in said second set and an indication of a number channelisation codes allocated to said second network nodes in said first set.

5. A method according to any preceding claim, wherein step (i) further comprises the step of calculating a proportion from said indication of size of those second network nodes in each of said first and second sets.

6. A method according to any preceding claim, wherein steps (i) and (ii) are periodically repeated.

7. A method according to any preceding claim wherein said first set of said second network nodes comprise non-MIMO capable network nodes and second set of said second network nodes comprise MIMO capable network nodes.

8. A method according to any preceding claim, wherein said first network node comprises a base station (20) and said second network nodes comprise user equipment (50).

9. A computer program product operable, when executed on a computer, to perform the method steps of any one of claims 1 to 8.

10. A network node (40) operable to modify a transmission mode of a plurality of sub-channels, each forming part of a radio frequency channel, in a wireless telecommunications network (10),
each of said sub-channels being transmitted by one of a plurality of transmission antenna (200; 201) provided on a first network node (20) to a plurality of second network nodes (50),
said plurality of second network nodes (50) comprising a first set and a second set,
said first set having a single reception antenna and said second set having a plurality of reception antenna,
said network node (40) comprising:
reception logic (800) operable to receive an indication of set size of those second network nodes in each of said first and second sets, and
modification logic (800) operable to modify said transmission mode of said sub-channels by modifying each sub-channel data stream (862, 872) by mixing a portion of each sub-channel data stream (862, 872) with each other sub-channel data stream, by applying (820) a mapping matrix having coefficients selected in accordance with said indication of the proportion of those second network nodes in each of said first and second sets to mix said data stream of said sub-channels.

## Patentansprüche

1. Verfahren zur Modifizierung eines Übertragungsmodus einer Vielzahl von Unterkanalen, welche jeweils einen Teil eines Funkfrequenzkanals bilden, in einem drahtlosen Telekommunikationsnetzwerk (10),
wobei ein jeder der besagten Unterkanäle über eine einer Vielzahl von auf einem ersten Netzwerkknoten bereitgestellten Sendeantennen (200; 201) an eine Vielzahl von zweiten Netzwerkknoten (50) übertragen wird,
wobei die besagte Vielzahl von zweiten Netzwerkknoten (50) einen ersten Satz und einen zweiten Satz umfasst,
wobei der besagte erste Satz eine einzelne Empfangsantenne aufweist und der besagte zweite Satz eine Vielzahl von Empfangsantennen aufweist,
wobei das besagte Verfahren die folgenden Schritte umfasst:
(i) Empfangen (905) einer Angabe über die Größe des Satzes dieser zweiten Netzwerkknoten sowohl in dem besagten ersten als auch in dem besagten zweiten Satz, und
(ii) Modifizieren (907) des besagten Übertragungsmodus der besagten Unterkanäle durch Modifizieren eines jeden Unterkanal-Datenstroms (862, 872) durch Mischen einer Partition eines jeden Unterkanal-Datenstroms (862, 872) mit jedem anderen Unterkanal-Datenstrom, unter Anwendung (820) einer Abbildungsmatrix mit gemäß der besagten Angabe über die Proportion dieser zweiten Netzwerkknoten in dem besagten ersten und dem besagten zweiten Satz ausgewählten Koeffizienten, um den besagten Datenstrom der besagten Unterkanäle zu mischen.

2. Verfahren nach Anspruch 1, wobei Schritt (i) den Schritt des Empfangens einer Angabe über die Anzahl der besagten zweiten Netzwerkknoten (50) in dem besagten zweiten Satz und über die Anzahl der besagten zweiten Netzwerkknoten in dem besagten ersten Satz umfasst

3. Verfahren nach Anspruch 1, wobei Schritt (i) den Schritt des Empfangens einer Angabe über die den besagten zweiten Netzwerkknoten in dem besagten zweiten Satz zugeteilte Sendeleistung und des Empfangens einer Angabe über die den besagten zweiten Netzwerkknoten in dem besagten ersten Satz zugeteilte Sendeleistung umfasst.

4. Verfahren nach Anspruch 1, wobei Schritt (i) den Schritt des Empfangens einer Angabe über eine Anzahl von den besagten zweiten Netzwerkknoten in dem besagten zweiten Satz zugeteilten Kanalisierungscodes und einer Angabe über eine Anzahl von den besagten zweiten Netzwerkknoten in dem besagten ersten Satz zugeteilten Kanalisierungscodes umfasst.

5. Verfahren nach einem beliebigen der vorstehenden Ansprüche, wobei Schritt (i) weiterhin den Schritt des Berechnens einer Proportion aus der besagten Angabe der Größe dieser zweiten Netzwerkknoten sowohl in dem besagten ersten als auch in dem besagten zweiten Satz umfasst.

6. Verfahren nach einem beliebigen der vorstehenden Ansprüche, wobei die Schritte (i) und (ii) periodisch wiederholt werden.

7. Verfahren nach einem beliebigen der vorstehenden Ansprüche, wobei der besagte erste Satz der besagten zweiten Netzwerkknoten nicht MIMO-fähige Netzwerknoten umfasst, und der zweite Satz der besagten zweiten Netzwerkknoten MIMO-fähige Netzwerkknoten umfasst.

8. Verfahren nach einem beliebigen der vorstehenden Ansprüche, wobei der besagte erste Netzwerkknoten eine Basisstation (20) und der besagte zweite Netzwerkknoten Benutzergeräte (50) umfasst.

9. Computerprogramm-Produkt, welches bei der Ausführung auf einem Computer betreibbar ist, um die Verfahrensschritte eines beliebigen der Ansprüche 1 bis 8 durchzuführen.

10. Netzwerkknoten (40), betreibbar für das Modifizieren eines Übertragungsmodus einer Vielzahl von Unterkanälen, welche jeweils einen Teil eines Funkfrequenzkanals bilden, in einem drahtlosen Telekommunikationsnetzwerk (10),
wobei ein jeder der besagten Unterkanäle über eine einer Vielzahl von auf einem ersten Netzwerkknoten (20) bereitgestellten Sendeantennen (200; 201) an eine Vielzahl von zweiten Netzwerkknoten (50) übertragen wird,
wobei die besagte Vielzahl von zweiten Netzwerkknoten (50) einen ersten Satz und einen zweiten Satz umfasst,
wobei der besagte erste Satz eine einzelne Empfangsantenne aufweist und der besagte zweite Satz eine Vielzahl von Empfangsantennen aufweist,
wobei der besagte Netzwerkknoten (40) umfasst:
Empfangslogik (800) für den Empfang einer Angabe über die Größe des Satzes dieser zweiten Netzwerkknoten sowohl in dem besagten ersten als auch in dem besagten zweiten Satz, und
Modifizierungslogik (800) für die Modifizierung des besagten Übertragungsmodus der besagten Unterkanäle durch Modifizieren eines jeden Unterkanal-Datenstroms (862, 872) durch Mischen einer Partition eines jeden Unterkanal-Datenstroms (862, 872) mit jedem anderen Unterkanal-Datenstrom, unter Anwendung (820) einer Abbildungsmatrix mit gemäß der besagten Angabe über die Proportion dieser zweiten Netzwerkknoten in dem besagten ersten und dem besagten zweiten Satz ausgewählten Koeffizienten, um den besagten Datenstrom der besagten Unterkanäle zu mischen.

## Revendications

1. Procédé de modification d'un mode de transmission d'une pluralité de sous-canaux, chacun faisant partie d'un canal de fréquence radio, dans un réseau de télécommunicotiori sans fil (10),
chacun desdits sous-canaux étant transmis par une antenne d'émission parmi une pluralité d'antennes d'émission (200 ; 201), prévues sur un premier noeud de réseau, vers une pluralité de deuxièmes noeuds de réseau (50),
ladite pluralité de deuxièmes noeuds de réseau (50) comprenant un premier ensemble et un deuxièrrre ensemble.
ledit premier ensemble ayant une seule antenne de réception et ledit deuxième ensemble ayant une pluralité d'antennes de réception,
ledit procédé comprenant les étapes suivantes :
(i) recevoir (905) une indication de taille d'ensemble de ces deuxièmes noeuds de réseau dans chacun desdits premier et deuxième ensembles, et
(ii) modifier (907) ledit mode de transmission desdits sous-canaux en modifiant chaque flux de données des sous-canaux (862, 872) en mélangeant une partie de chaque flux de données des sous-canaux (862, 872) à chaque autre flux de données des sous-canaux, en appliquant (820) une matrice de mappage ayant des coefficients sélectionnés en fonction de ladite indication de la proportion de ces deuxièmes noeuds de réseau dans chacun desdits premier et deuxième ensembles pour mélanger ledit flux de données desdits sous-canaux.

2. Procédé selon la revendication 1, dans lequel l'étape (i) comprend l'étape de réception d'une indication d'un nombre desdits deuxièmes noeuds de réseau (50) dans ledit deuxième ensemble et d'un nombre desdits deuxièmes noeuds de réseau dans ledit premier ensemble.

3. Procédé selon la revendication 1, dans lequel l'étape (i) comprend l'étape de réception d'une indication d'une puissance de transmission attribuée auxdits deuxièmes noeuds de réseau dans ledit deuxième ensemble et de réception d'une indication d'une puissance de transmission attribuée auxdits deuxièmes noeuds de réseau dans ledit premier ensemble.

4. Procédé selon la revendication 1, dans lequel l'étape (i) comprend l'étape de réception d'une indication d'un nombre de codes de canalisation attribués auxdits
deuxième noeuds do réseau dans ledit deuxième ensemble et d'une indication d'un nombre de codes de canalisation attribués auxdits deuxièmes noeuds de réseau dans ledit premier ensemble.

5. Procédé selon l'une quelconque des revendications précédentes, dans lequel l'étape (i) comprend en outre l'étape de calcul d'une proportion à partir de ladite indication de taille de ces deuxièmes noeuds de réseau dans chacun desdits premier et deuxième ensembles.

6. Procédé selon l'une quelconque des revendications précédentes, dans lequel les étapes (i) et (ii) sont répétées périodiquement.

7. Procédé selon l'une quelconque des revendications précédentes dans lequel ledit premier ensemble desdits deuxièmes noeuds de réseau comprend des noeuds de réseau non compatibles MIMO et ledit deuxième ensemble desdits deuxièmes noeuds de réseau comprend des noeuds de réseau compatibles MIMO.

8. Procédé selon l'une quelconque des revendications précédentes, dans lequel ledit premier noeud de réseau comprend une station de base (20) et lesdits deuxièmes noeuds de réseau comprennent un équipement utilisateur (50).

9. Produit de programme informatique permettant, lorsqu'il est exécuté sur un ordinateur, d'exécuter les étapes du procédé selon l'une quelconque des revendications 1 à 8.

10. Noeud de réseau (40) permettant de modifier un mode de transmission d'une pluralité de sous-canaux, chacun faisant partie d'un canal de fréquence radio, dans un réseau de télécommunication sans fil (10),
chacun desdits sous-canaux étant transmis par une antenne d'émission parmi une pluralité d'antennes d'émission (200 ; 201), prévues sur un premier noeud de réseau (20), vers une pluralité de deuxièmes noeuds de réseau (50),
ladite pluralité de deuxièmes noeuds de réseau (50) comprenant un premier ensemble et un deuxième ensemble,
ledit premier ensemble ayant une seule antenne de réception et ledit deuxième ensemble ayant une pluralité d'antennes de réception,
ledit noeud de réseau (40) comprenant :
une logique de réception (800) permettant de recevoir une indication de taille d'ensemble de ces deuxièmes noeuds de réseau dans chacun desdits premier et deuxième ensembles, et
une logique de modification (800) permettant de modifier ledit mode de transmission desdits sous-canaux en modifiant chaque flux de données des sous-canaux (862, 872) en mélangeant une partie de chaque flux de données des sous-canaux (862, 872) à chaque autre flux de données des sous-canaux, en appliquant (820) une matrice de mappage ayant des coefficients sélectionnés en fonction de ladite indication de la proportion de ces deuxièmes noeuds de réseau dans chacun desdits premier et deuxième ensembles pour mélanger ledit flux de données desdits sous-canaux.
